# EUROPEAN PATENT APPLICATION

(11) **EP 1 630 657 A1**
(43) Date of publication of application: **01.03.2006**
(21) Application number: 04425643.6
(22) Date of filing: 30.08.2004
(51) Int. Cl.: G06F 3/06

(54) **Embedded storage device with integrated data-management functions and storage system incorporating it**

(71) Applicant: STMicroelectronics S.r.l., 20041 Agrate Brianza (Milano) (IT)
(72) Inventor: Chezzi, Stefano, 24048 Treviolo (IT); Roveda, Marco, 20086 Motta Visconti (IT); Saltutti, Stefano, 06023 Gualdo Tadino (IT); Scarioni, Giorgio, 20152 Milano (IT)
(74) Representative: Cerbaro, Elena

(57) **Abstract**

In a storage system (20) for an electronic device (27), a system controller (21) is connected to an embedded storage device (23) for supervising writing and reading operations in the embedded storage device; a data manager (36) based upon a microprocessor (38) is integrated in the embedded storage device (23) and provides a high-level abstraction of the physical organization of the embedded storage device (23) through the definition of an own logic map. The data manager (36) is implemented outside the controller (21). The controller (21) is formed in a first semiconductor material region, the embedded storage device (23) is formed in a second semiconductor material region distinct from the first semiconductor material region, and the data manager (36) is formed in a third semiconductor material region distinct from the first semiconductor material region.

## Description

The present invention relates to an embedded storage device with integrated data-management functions and to a storage system incorporating it.

As is known, many consumer electronic devices, such as, for example, cellphones, digital photocameras, readers of audio files in MP3 format, etc., are equipped with storage media operating as normal disk drives and storing the data as files.

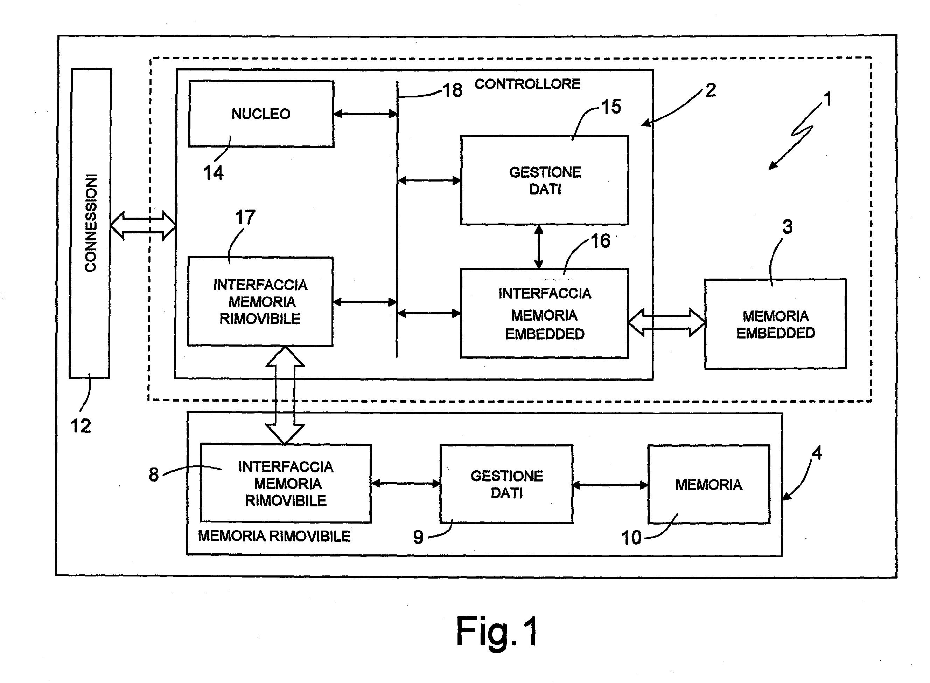

As illustrated in Figure 1, a storage system 1 is basically made up of one or more embedded storage devices 3, one or more removable storage devices 4, and a controller 2 for controlling the storage system and operating as an interface and interpreter between the user and the various storage devices.

The fundamental difference between the embedded storage device 3 and the removable storage device 4 is represented by the fact that, whereas the former is basically constituted by a simple array of addressable memory cells, the latter has a more complex architecture and basically comprises an interface 8, an internal data manager 9, and a memory 10. For both of the storage devices, the memory is generally of a writeable and electrically erasable non-volatile type, in the majority of cases of a flash type. This type of memory, in fact, affords short access times, high storage capacity, low power consumption, and a great versatility of use, combined with contained costs.

The controller 2 is basically made up of a microprocessor 14 which supervises operation of the controller 2; an embedded memory interface 16; a removable memory interface 17; and a data manager 15, operatively connected to the embedded memory interface 16. The controller 2 further comprises a data bus 18, which is connected to the microprocessor 14, to the data manager 15, to the embedded memory interface 16, and to the removable memory interface 17, and enables transfer of data and control signals.

The main task of the data manager 15 is to define a logic map of the embedded storage device 3 and to determine its evolution in time, so as to allow the user to perform the desired functions irrespective of the knowledge of the structure and of the physical characteristics of the embedded storage device 3. In particular, in embedded flash storage devices, the data manager is known by the name of "Flash Translation Layer" (FTL) and supplies a high-level abstraction of the physical organization of the flash storage device, emulating the typical block structure of a disk drive, i.e., causing the flash storage device to appear from the outside as a vector of contiguous memory blocks. The FTL in particular enables rewriting of memory sectors (as occurs, for example, in hard disks), re-addressing the data towards other memory locations and marking as occupied the previously occupied sectors. When necessary, the FTL then frees part of the memory previously marked as invalid to enable writing of new data.

The storage system 1 illustrated in Figure 1 presents some disadvantages.

In particular, when a plurality of different embedded storage devices 3 is envisaged, the controller 2 must be provided with more specific embedded-memory interfaces 16, one for each embedded storage device 3, or else it must be provided with a single interface compatible with the different types of embedded memory 3. In the first case, the storage system 1 has the disadvantage of involving high production costs, because of the plurality of embedded-memory interfaces 16, whereas in the second case the single interface cannot be optimized as to performance for all the embedded storage devices 3, and moreover there always exists the risk that a new embedded storage device 3 will not be compatible with a pre-existing interface.

Furthermore, the storage system 1 comprises two data managers 9, 15, one in the removable storage device 4 and one in the controller 2. This can give rise to different levels of reliability of the data on account of the possible different management of the data in the embedded memory 3 as compared to the data management in the removable memory 4.

In addition, the presence of different memory interfaces in the controller 2 involves an additional workload for the microprocessor 14 of the controller 2, which must manage the accesses to the various storage devices in different ways, according to the type of interface, at the expense of the performance of the storage system 1.

Finally, in a storage system of the type illustrated in Figure 1, the controller 2 must necessarily be of a dedicated (or application-specific) type, which inevitably involves high costs.

The aim of the present invention is consequently to provide an embedded storage device and a storage system that overcomes the limits and problems highlighted with reference to the prior art.

The above aim is achieved by the present invention in so far as it relates to a storage system as defined in claim 1, and to a storage device as defined in claim 16.

For a better understanding of the present invention, some preferred embodiments are now described, purely by way of nonlimiting example, with reference to the attached drawings, wherein:
- Figure 1 shows a block diagram of a storage system of a known type;
- Figure 2 shows a block diagram of a storage system according to a first embodiment of the present invention;
- Figure 3 shows a schematic perspective view of a circuit embodiment of a part of the storage system of Figure 2;
- Figure 4 shows a block diagram of a detail of the system of Figure 2;
- Figure 5 shows a block diagram of a storage system according to a second embodiment of the present invention;
- Figure 6 shows a block diagram of a storage system according to a third embodiment of the present invention;
- Figure 7 shows a block diagram of a storage system according to a fourth embodiment of the present invention;
- Figure 8 shows a block diagram of a storage system according to a fifth embodiment of the present invention; and
- Figure 9 shows a block diagram of a storage system with modular memory density.

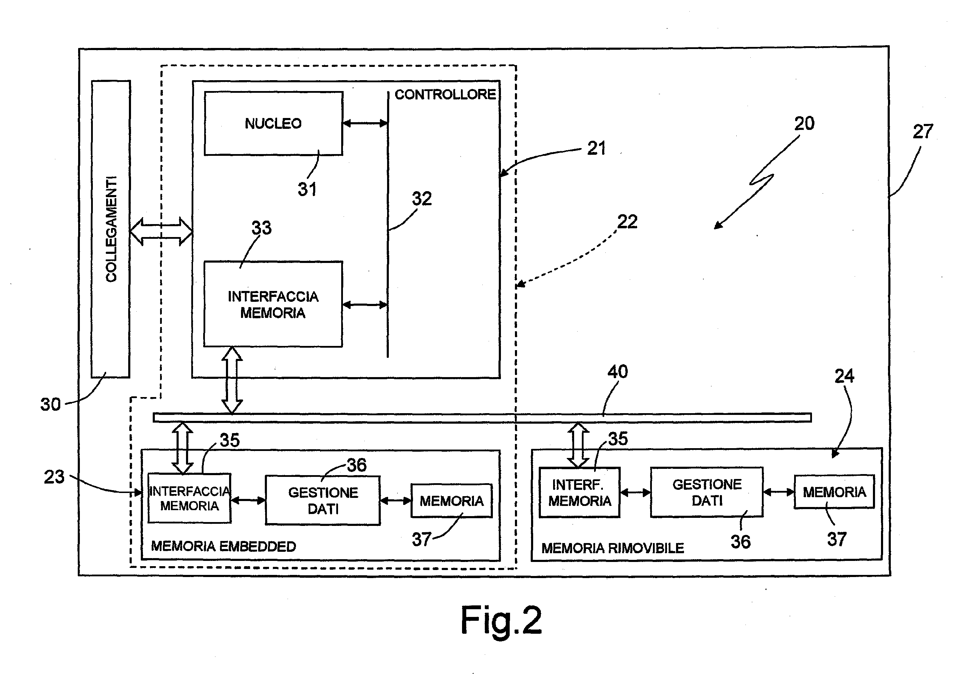

Figure 2 shows a storage system 20, according to a first embodiment of the present invention, for an electronic device 27. The storage system 20 comprises a controller 21, at least one embedded storage device 23, and at least one removable memory 24.

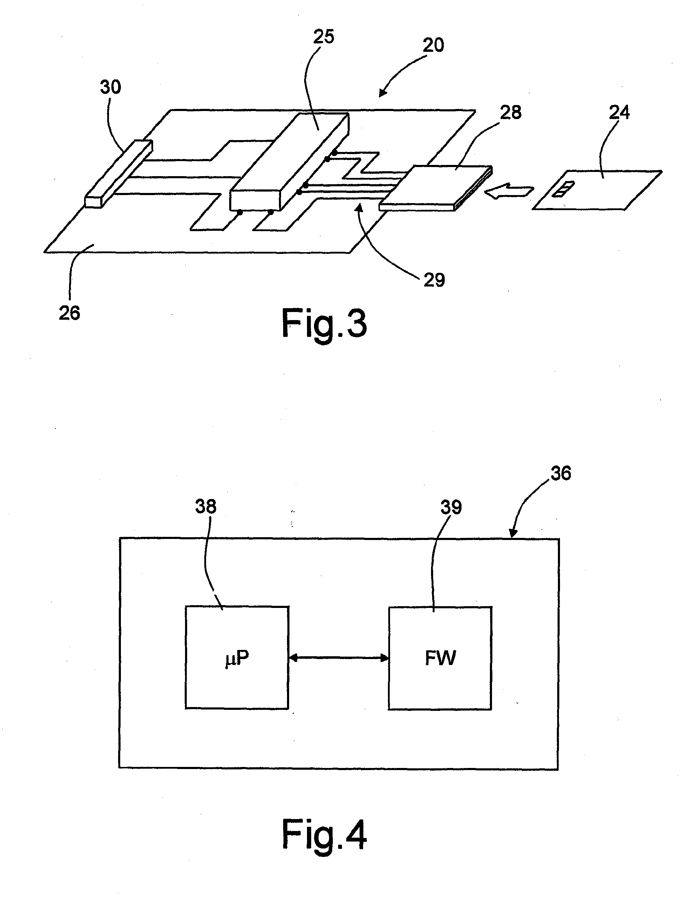

The embedded storage device 23 is connected to the electronic device 27 in a non-removable way. In particular, the embedded storage device 23 and the controller 21 are provided in a same chip 22, represented schematically in Figure 2 by a dashed rectangle. Inside the chip 22, the embedded storage device 23 and the controller 21 occupy two physically distinct regions. The chip 22 (see also Figure 3) can be housed in a package 25, for example of a ball-grid-array (BGA) type, and then soldered to a printed circuit 26.

The removable storage device 24, for example a memory card, is instead removable from the electronic device 27, and, in a known way, may be housed in a purposely provided slot 28. The slot 28 has, inside, appropriate electrical contacts designed to interface with corresponding electrical contacts carried by the removable storage device 24. Conductive tracks 29 provided on the printed circuit 26 connect the removable storage device 24, when housed in the slot 28, to the controller 21.

The storage system 20 further comprises connections 30, designed to connect the controller 21 to other parts (not shown) of the electronic device 27.

In greater detail, the controller 21 comprises a microprocessor 31, which supervises operation of the controller 21, and a single interface 33, which communicates with the microprocessor 31 through an internal data bus 32. It should be emphasized that the controller 21 is not equipped with a data-management function, and a single interface 33 operates for the embedded storage device 23 and the removable storage device 24.

According to one aspect of the invention, the embedded storage device 23 and the removable storage device 24 have a similar architecture, and in particular are both provided with an integrated data-management function.

In detail, the embedded storage device 23 and the removable storage device 24 comprise an interface 35, a data manager 36, and a memory 37, constituted by an addressable array of memory cells, for example of a NAND flash type (in this case the data manager 36 implements the FTL). In particular (Figure 4), the data manager 36 comprises a microprocessor 38 provided with an integrated memory 39 (either ROM or RAM), which contains a firmware (or integrated software) programmed so as to obtain management of the data stored in the memory 37.

The interface 35, the data manager 36, and the memory 37 of the embedded storage device 23 are integrated in the chip 22; in particular, they are provided within the region of the chip 22 dedicated to the embedded storage device 23.

The storage system 20 further comprises an external data bus 40, which connects the embedded storage device 23 and the removable storage device 24, in particular the respective interfaces 35, to the interface 33 of the controller 21.

It is stressed that positioning the data manager 36 within the embedded storage device 23 allows the controller 21 not to depend upon the physical structure of the embedded storage device 23 and removable storage device 24. In particular, the controller 21 only needs to know the communication protocol used on the external data bus 40, and it does not have to know the physical structure of the storage devices. Therefore, the interface 33 within the controller 21 is just one, irrespective of the type and number of storage devices to which the controller 21 can be connected. Basically, the external data bus 40 carries only generic input and output signals and control signals so that the controller 21 could be a generic input/output controller instead of a dedicated (or application-specific) controller.

The external data bus 40 connected to the interface 33 of the controller 21 and to the interfaces 35 of the embedded and removable storage devices 23, 24 can use any protocol of a known type, for example an MMC (MultiMediaCard™) interface protocol, or an SPI (Serial Peripheral Interface) interface protocol or a USB (Universal Serial Bus) interface protocol. In particular, any desired number of storage devices, whether embedded or removable, can be connected to the external data bus 40 according to the protocol used.

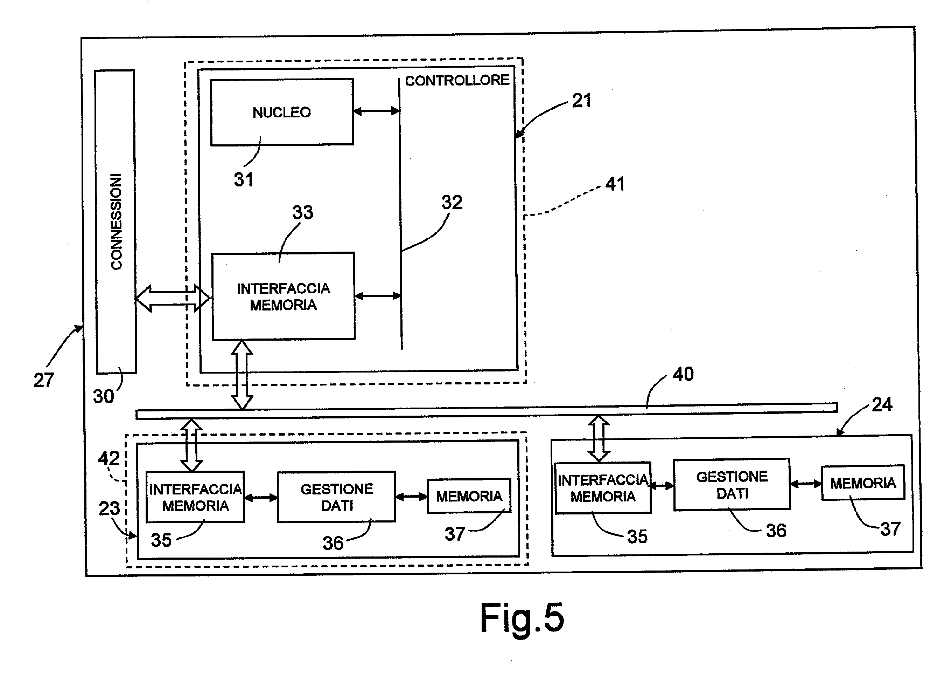

According to a second embodiment of the present invention, illustrated in Figure 5, the controller 21 and the embedded storage device 23 are formed in two distinct chips, illustrated by dashed rectangles designated, respectively, with the reference numbers 41 and 42. The chips 41 and 42 can be both soldered to the PCB 26 and connected by conductive tracks, or can for example be stacked within a same package, for example a BGA package, using the stacked-chip technique.

In particular, the division of the controller 21 and of the embedded storage device 23 into two distinct chips enables a greater modularity and flexibility of the storage system 20, since the storage density may be varied more easily. The disadvantage of a solution of this sort may be represented by the higher production costs.

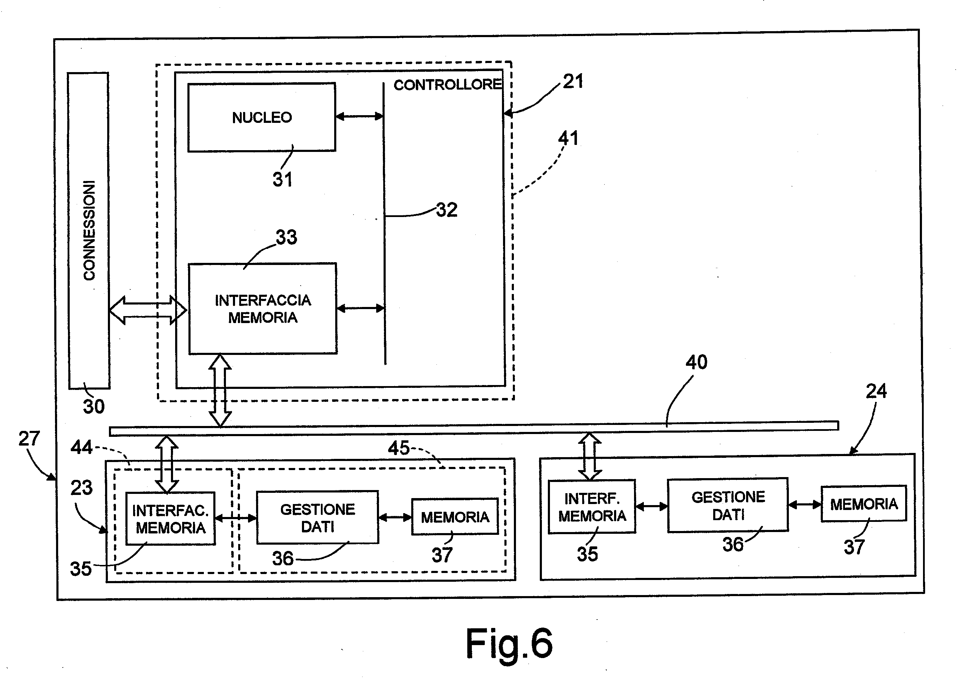

Figures 6 to 8 show, respectively, a third, a fourth and a fifth embodiment of the present invention, which differ simply as regards the implementation of the embedded storage device 23.

In detail, in the third embodiment (Figure 6) the embedded storage device 23 is formed in two distinct chips 44, 45, one of which, for example the chip 44, integrates the interface 35, and the other, in the example the chip 45, integrates both the data manager 36 and the memory 37. Advantageously, in order to reduce overall dimensions, the two chips 44, 45 can be housed in a same package with the stacked-chip technique.

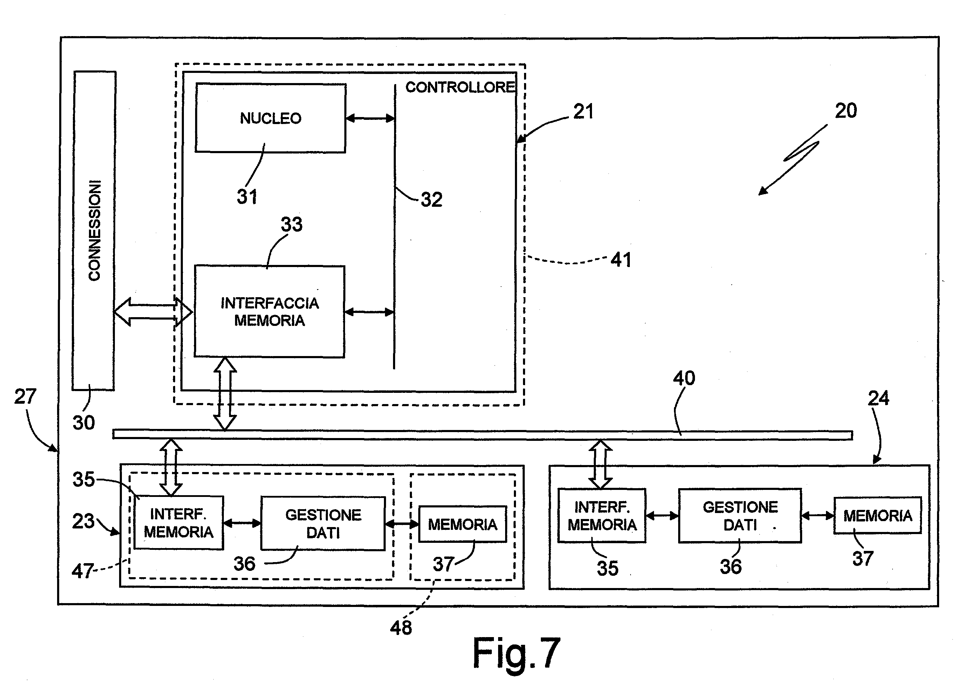

According to the fourth embodiment (Figure 7), the embedded storage device 23 is once again made in two distinct chips 47, 48. Unlike the third embodiment, one of the chips, for example the chip 47, integrates the interface 35 and the data manager 36, while the other chip, in the example the chip 48, integrates the memory 37.

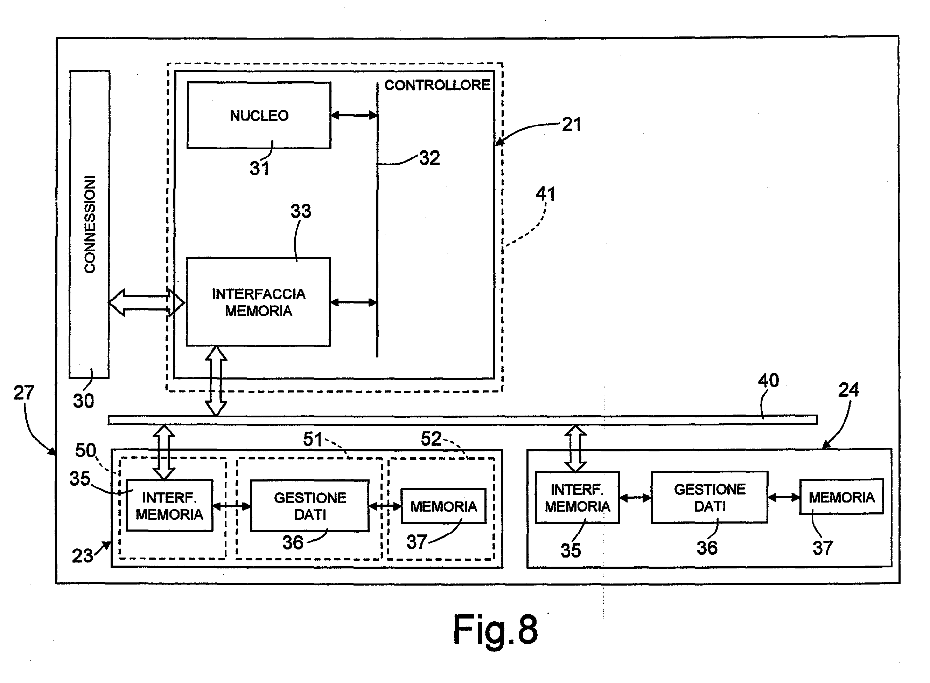

According to the fifth embodiment (Figure 8), the embedded storage device is formed in three distinct chips 50, 51, 52, which integrate the interface 35, the data manager 36, and the memory 37, respectively.

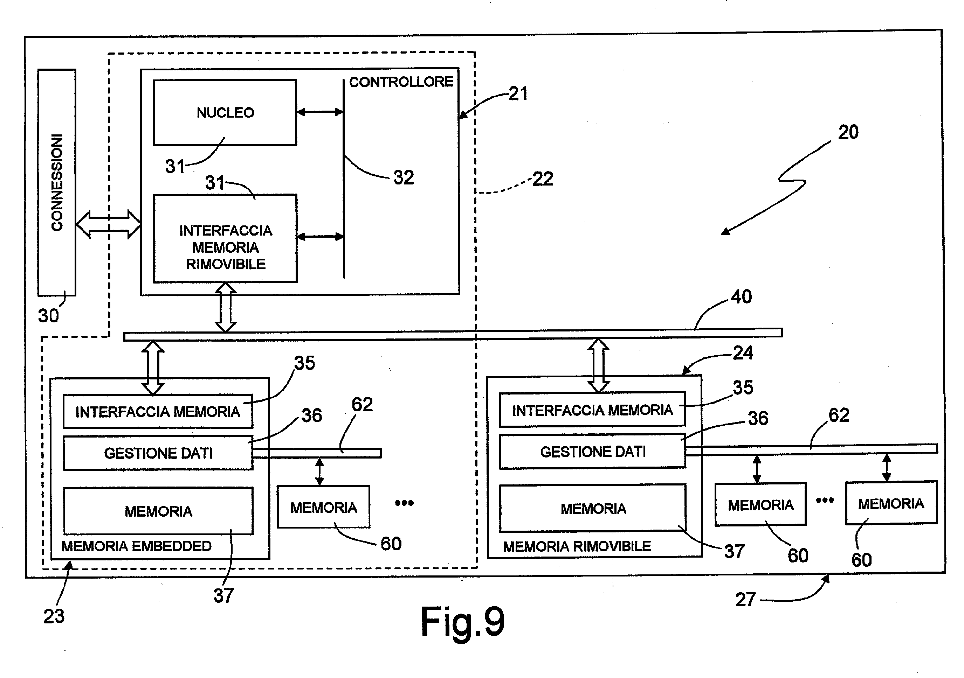

According to a further aspect of the present invention (see Figure 9), the storage system 20, implemented according to any of the embodiments described previously, may further comprise a plurality of additional storage devices 60, connected to the embedded storage device 23 and to the removable storage device 24 to increase their respective storage density, in a modular way.

In particular, the additional storage devices 60 are formed by a simple storage element (for example, an addressable array of cells of a NAND flash type) and are not provided with advanced data-management functions. The additional storage devices 60 are connected to the data manager 36 of the embedded storage device 23 and of the removable storage device 24 via a respective connection bus 62. In this case, the embedded storage device 23 and the removable storage device 24 have a master function, because they have an integrated data-management function, while the additional storage devices 60 have a slave function, since they are managed by the data manager 36 of the respective embedded storage device 23 or removable storage device 24. The additional memories (slaves) 60 that are provided for expanding the removable memory 24 must be in the same box as the removable memory 24, in a different chip or in a different package.

Depending on the embodiment of the storage system 20, the additional storage devices 60 connected to the embedded storage device 23 can be integrated within the chip 22 (as illustrated in Figure 9), or each additional storage device 60 may be provided in a distinct chip. In the latter case, each additional storage device 60 may have a distinct package and be connected outside the master storage device, or alternatively, the various chips of the additional storage devices 60 can be stacked on the chip of the master storage device inside a same package.

Thereby, the storage system 20 is extremely modular and any desired number of additional storage devices 60 can be connected to the embedded and removable storage devices 23, 24 so as to expand the corresponding storage density as desired.

The advantages of the present invention are evident from the above.

In particular, the described storage system enables a simplification of the controller of the storage system, which does not perform a data management function, thus can be a controller of a general-purpose type, and hence a low-cost one. Moreover, the controller has a single interface for all the different storage devices comprised in the storage system, which are all connected to the same data bus. In particular, in this way there is no need to replace the controller in the case where new types of storage devices are used.

The storage system is moreover optimized since each storage device, whether embedded or removable, has a data manager and an interface optimized for the specific use of the storage device.

Finally, the storage system is extremely modular and enables addition of any desired number of additional storage devices to increase the storage density of the system.

It is clear that modifications and variations may be made to what has been described and illustrated herein, without thereby departing from the scope of the present invention, as defined in the attached claims.

In particular, it is evident that the storage system is not tied to the use of a particular type of memory (flash memories of a NOR type, or any other type of electrically writeable and erasable non-volatile memory, could for example be used instead of flash memories of a NAND type) or of a particular production technique.

## Claims

1. A storage system (20) for an electronic device (27), comprising an embedded storage device (23), a controller (21) configured for supervising writing and reading operations in said embedded storage device (23), and a data manager (36) configured for providing a high-level abstraction of the physical organization of the embedded storage device (23) through the definition of an own logic map, **characterized in that** said data manager (36) is external to said controller (21).

2. The storage system according to claim 1, wherein said embedded storage device (23) comprises said data manager (36), in particular said data manager (36) is integrated in said embedded storage device (23).

3. The storage system according to claim 2, wherein said embedded storage device (23) further comprises an interface (35) and at least one memory (37), and wherein said data manager (36) is arranged between said interface (35) and said memory (37).

4. The storage system according to any one of the preceding claims, further comprising a plurality of distinct storage elements (60), connected to said data manager (36) via a data bus (62); and wherein said data manager (36) interacts with said storage elements (60) according to a master-slave modality.

5. The storage system according to any one of the preceding claims, wherein said data manager (36) comprises a microprocessor (38) having a memory (39) storing a data-management firmware.

6. The storage system according to any one of the preceding claims, further comprising at least one removable storage device (24) connected to said embedded storage device (23) and to said controller (21) through a data bus (40).

7. The storage system according to claim 6, wherein said removable memory (24) comprises an own data manager (36); said storage system further comprising a plurality of distinct storage elements (60), connected to said data manager (36) of said removable memory (24) via a respective data bus (62); and wherein said data manager (36) interacts with said storage elements (60) according to a master-slave modality.

8. The storage system according to any one of the preceding claims, wherein said controller (21) is formed in a first semiconductor material region, said embedded storage device (23) is formed in a second semiconductor material region distinct from said first semiconductor material region, and said data manager (36) is formed in a third semiconductor material region distinct from said first semiconductor material region.

9. The storage system according to claim 8, wherein said third semiconductor material region is arranged within said second semiconductor material region.

10. The storage system according to claim 8 or 9, wherein said first and third semiconductor material regions are formed in a same chip (22).

11. The storage system according to claim 8 or 9, wherein said first and third semiconductor material regions are provided in distinct chips (41, 42; 45; 47; 51).

12. The storage system according to claim 11, wherein said embedded storage device (23) further comprises an interface (35) and at least one memory (37); and wherein said interface (35), said memory (37), and said data manager (36) are provided in distinct chips (50, 51, 52).

13. The storage system according to claim 11, wherein said embedded storage device (23) further comprises an interface (35) and at least one memory (37); and wherein said interface (35) and said data manager (36) are formed in a first chip (47) , and said memory (37) formed in a second chip (48) distinct from the first chip (47).

14. The storage system according to claim 11, wherein said embedded storage device (23) further comprises an interface (35) and at least one memory (37); and wherein said memory (37) and said data manager (36) are formed in a first chip (45), and said interface (35) is provided in a second chip (44) distinct from the first chip (45).

15. The storage system according to any one of the preceding claims, wherein said controller (21) is of a general-purpose type.

16. An embedded storage device (23) for a storage system (20) for an electronic device (27), **characterized by** a data manager (36) configured for providing a high-level abstraction of the physical organization of the embedded storage device (23) through the definition of an own logic map.

17. The embedded storage device according to claim 16, further comprising an interface (35) and at least one memory (37), and wherein said data manager (36) is arranged between said interface (35) and said memory (37).

18. The storage device according to claim 17, further comprising a plurality of distinct storage elements (60), connected to said data manager (36) via a data bus (62); and wherein said data manager (36) interacts with said storage elements (60) according to a master-slave type modality.

19. The storage device according to any of claims 16-18, wherein said data manager (36) comprises a microprocessor (38) having a memory (39) storing a data-management firmware.

20. The embedded storage device according to any of claims 16-19, for a storage system (20) comprising a controller (21) configured for supervising writing and reading operations in said embedded storage device (23) and formed in a first semiconductor material region, wherein said embedded storage device (23) is formed in a second semiconductor material region distinct from said first semiconductor material region, and said data manager (36) is formed in a third semiconductor material region distinct from said first semiconductor material region.

21. The embedded storage device according to claim 20, wherein said third semiconductor material region is arranged within said second semiconductor material region.

22. The embedded storage device according to claim 20 or 21, wherein said first and third semiconductor material regions are formed in a same chip (22).

23. The embedded storage device according to claim 20 or 21, wherein said first and third semiconductor material regions are provided in distinct chips (41, 42).

24. The embedded storage device according to claim 23, further comprising an interface (35) and at least one memory (37), and wherein said interface (35), said memory (37), and said data manager (36) are formed in distinct chips (50, 51, 52) .

25. The embedded storage device according to claim 23, further comprising an interface (35) and at least one memory (37), and wherein said interface (35) and said data manager (36) are formed in a first chip (47) and said memory (37) is formed in a second chip (48) distinct from the first chip (47).

26. The embedded storage device according to claim 23, further comprising an interface (35) and at least one memory (37), and wherein said memory (37) and said data manager (36) are provided in a first chip (45), and said interface (35) is provided in a second chip (44) distinct from the first chip (45).

27. An electronic device (27) incorporating a storage system (20) according to any one of claims 1-14.
